# EUROPEAN PATENT SPECIFICATION

(11) **EP 4 130 981 B1**
(45) Date of publication and mention of the grant of the patent: **02.07.2025**
(21) Application number: 20927914.0
(22) Date of filing: 27.03.2020
(51) Int. Cl.: G06F 9/455, G06F 9/50, G06F 8/10, G06F 8/60

(54) **RESOURCE MANAGEMENT DEVICE, RESOURCE MANAGEMENT METHOD AND RESOURCE MANAGEMENT PROGRAM**
RESSOURCENVERWALTUNGSVORRICHTUNG, RESSOURCENVERWALTUNGSVERFAHREN UND RESSOURCENVERWALTUNGSPROGRAMM
DISPOSITIF DE GESTION DE RESSOURCES, PROCÉDÉ DE GESTION DE RESSOURCES ET PROGRAMME DE GESTION DE RESSOURCES

(43) Date of publication of application: 08.02.2023
(73) Proprietor: Nippon Telegraph And Telephone Corporation, Chiyoda-ku Tokyo 100-8116 (JP)
(72) Inventor: AOKI, Daisuke, Musashino-shi, Tokyo 180-8585 (JP); HASEBE, Katsuyuki, Musashino-shi, Tokyo 180-8585 (JP); KANZAKI, Makoto, Musashino-shi, Tokyo 180-8585 (JP); KUSAKABE, Yusuke, Musashino-shi, Tokyo 180-8585 (JP)
(74) Representative: Dehns
(86) International application number: PCT/JP2020/014209
(87) International publication number: WO 2021/192267

(56) References cited:
- JP-A- 2017 536 608
- US-A1- 2013 232 480
- US-A1- 2014 052 773
- MICHAEL WURSTER ET AL: "Developing, deploying, and operating twelve-factor applications with TOSCA", INFORMATION INTEGRATION AND WEB-BASED APPLICATIONS & SERVICES, ACM, 2 PENN PLAZA, SUITE 701NEW YORKNY10121-0701USA, 4 December 2017 (2017-12-04), pages 519 - 525, XP058386051, ISBN: 978-1-4503-5299-4, DOI: 10.1145/3151759.3151830
- HIROSHI YOSHIDA, RIICHIRO TAKE, MITSUHIRO KISHIMOTO, MASANOBU HIBI: "Service Oriented Platform", MAGAZINE FUJITSU, vol. 61, no. 3, 10 May 2010 (2010-05-10), JP , pages 283 - 290, XP009540263, ISSN: 0016-2515

## Description

### Technical Field

The present invention relates to a resource management device, a resource management method, and a resource management program.

### Background Art

In recent years, techniques for allowing a service provider, such as that of a cloud service, to provide a service to an end user has been actively developed. For example, Patent Literature 1 discloses "an inter-business operator package service construction device that provides a package of one or a plurality of communication services which are released on communication service APIs for each wholesale service provider and which are different from each other, in response to an order request for utilizing a communication service from a terminal which provides communication to a user, the inter-business operator package service construction device including a package construction function unit that retains a catalog describing specifications of communication wholesale services and a coordination rule defining coordination of various kinds of communication services and, in a case where an order request for utilizing a plurality of communication services is made from the terminal, constructs a coordination service by collectively coordinating the communication service APIs corresponding to the plurality of communication services requested by the order request based on the retained catalog and coordination rule and provides the constructed coordination service to the terminal".
US 2013/232480 A1 discloses a single, logical, multi-tier application blueprint used for the deployment and management of multiple physical applications in a cloud environment.

### Citation List

### Patent Literature

Patent Literature 1: Japanese Patent Laid-Open No. 2018-32897 (Claim 1)

### Summary of the Invention

### Technical Problem

Further, in recent years, there are a number of services such as a platform as a service (PaaS) and an infrastructure as a service (IaaS) which can be utilized or provided via the Internet, and a technique for a system that provides such a plurality of types of services has been actively developed. A vendor which handles a plurality of types of services has unique domains (multi-domain). In other words, a plurality of types of domains exist, and a system is designed so as to achieve coordination among the domains. Further, a virtualization technology is used to provide a plurality of types of services. Thus, resources within each domain are multi-layered and belong to a physical layer, a virtual layer, an application layer, or the like (multi-layer). The resources are also referred to as information and communication technology (ICT) resources. Further, a system is designed so as to achieve coordination among a plurality of types of services, which achieves interaction among users who utilize different services (multi-service). Note that a multi-service, a multi-domain and a multi-layer will be collectively referred to as "triple multi" below.

However, typically, owners of resources are different, and thus, the respective resources are individually managed for each domain and for each layer. It is therefore normally impossible to apply operation know-how of a system constituted with certain resources to other resources. This results in making control of resources in triple multi extremely complicated in related art and making design of a system which can support triple multi difficult.

In view of such circumstances, an object of the present invention is to facilitate design change of a system that provides a plurality of types of services. Means for Solving the Problem

The invention is set out in the appended set of claims.

### Advantageous Effects of the Invention

In the present invention, it is possible to facilitate design change of a system that provides a plurality of types of services.

### Brief Description of Drawings

Fig. 1 is a functional configuration diagram of a resource management device according to an embodiment of the present invention.
Fig. 2 is an explanatory diagram of an example of a data model.
Fig. 3 is a flowchart of design processing.
Fig. 4 is a specific example (1/3) of design of a system.
Fig. 5 is a specific example (2/3) of design of the system.
Fig. 6 is a specific example (3/3) of design of the system.
Fig. 7 is a view illustrating a computer which executes a program of processing according to the present embodiment.

### Description of Embodiments

An embodiment for implementing the present invention (hereinafter, referred to as "the present embodiment") will be described below with reference to the drawings. In the present embodiment, design of a system which can support triple multi will be described. It is assumed that the multi-layer is constituted with a physical layer, a virtual layer, and an application layer. The virtual layer exists on the physical layer, and the application layer exists on the virtual layer. Resources for providing a plurality of types of services can be arranged in each of the physical layer, the virtual layer, and the application layer. The resource to be arranged in the application layer may be referred to as an "application". For explanatory convenience, an application may be abbreviated as an "app". The resource to be arranged in the physical layer may be referred to as a "physical resource". The resource to be arranged in the virtual layer may be referred to as a "virtual resource". The physical resource and the virtual resource may be collectively referred to as an "infrastructure".

### [Configuration]

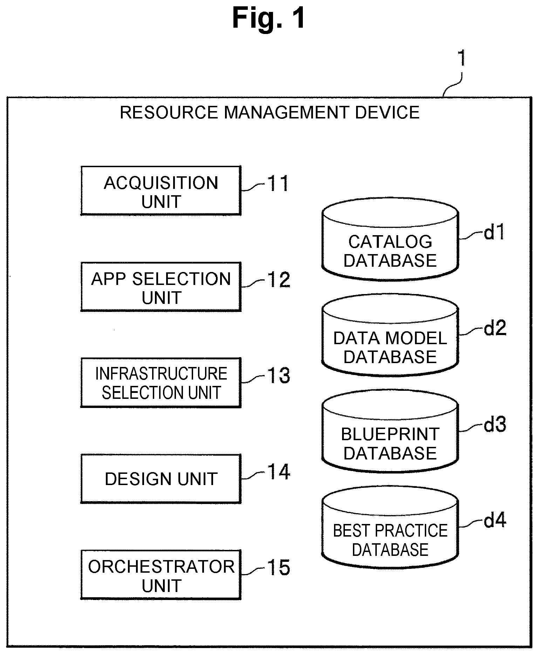

A resource management device according to the present invention is a device that manages resources for providing a plurality of types of services. As illustrated in Fig. 1, a resource management device 1 of the present embodiment includes an acquisition unit 11, an app selection unit 12, an infrastructure selection unit 13, a design unit 14, and an orchestrator unit 15. Further, the resource management device 1 stores a catalog database d1, a data model database d2, a blueprint database d3 and a best practice database d4. Various kinds of information including the catalog database d1, the data model database d2, the blueprint database d3 and the best practice database d4 are stored in a storage unit (not illustrated) provided at the resource management device 1.

The acquisition unit 11 acquires a request from an external device. The external device includes, but not limited to, for example, a device such as an information terminal to be used by a user who utilizes a service and a console to be used by an operator who manages a network. The request includes, but not limited to, a request which, for example, requires design, construction and change of a system and which, for example, expresses a request on business. A form of the request can include, but not limited to, for example, text, speech and a command. Further, an external information source can be used as the external device, and the acquisition unit 11 can acquire external information from the external information source. The external information includes, but not limited to, for example, an alert occurring on a network by monitoring a system, a log of a system on a network, information posted on a social networking service (SNS) and information regarding weather and traffic. The request may be equated with the external information as a trigger of processing to be performed in the present embodiment, and the request is not distinguished from the external information unless the circumstances are exceptional in the present embodiment.

The app selection unit 12 selects apps for satisfying the request acquired by the acquisition unit 11. The app selection unit 12 can select apps by analyzing the request and extracting a predetermined catalog from the catalog database d1 based on the analysis result. A technique for analyzing a request itself is well known, and thus, detailed description will be omitted. A catalog is a form of process required for providing a service, and one or a plurality of apps required for providing the service are designated. The catalog itself is well known, and thus, detailed description will be omitted.

Further, the app selection unit 12 can set a data pipeline to be utilized by the selected apps. The data pipeline is a path of data from a data transmission source (for example, an infrastructure) to a data transmission destination (for example, an infrastructure). The app selection unit 12 can set the data pipeline through well-known pipeline processing. For example, the data pipeline can include, but not limited to, a pipeline which has predetermined data processing order by a software pipeline which is one of the pipeline processing.

Particularly, the app selection unit 12 can select apps included in a best practice. The app selection unit 12 can select apps by selecting a best practice including apps for satisfying a request from the best practice database d4. The best practice is a group of resources which have been confirmed to be optimized so as to exert performance of a level equal to or greater than a predetermined level in provision of a predetermined service. Details of the best practice will be described later. While the apps selected by the app selection unit 12 may be apps included in the best practice or apps which are not included in the best practice, the app selection unit 12 preferentially selects infrastructures included in the best practice.

The infrastructure selection unit 13 selects infrastructures for the apps selected by the app selection unit 12. The infrastructure selection unit 13 can select infrastructures having relation with the selected apps using a specific data model with reference to the data model database d2. Details of the data model will be described later.

Particularly, the infrastructure selection unit 13 can select infrastructures included in the best practice. The infrastructure selection unit 13 can select infrastructures capable of exchanging data with the apps selected by the app selection unit 12 or infrastructures capable of exchanging data with the infrastructures selected by the infrastructure selection unit 13 with reference to the best practice database d4. While the infrastructures selected by the infrastructure selection unit 13 may be infrastructures included in the best practice or may be infrastructures which are not included in the best practice, the infrastructure selection unit 13 preferentially selects infrastructures included in the best practice.

The design unit 14 designs a system using the apps selected by the app selection unit 12 and the infrastructures selected by the infrastructure selection unit 13. Specifically, the design unit 14 generates a blueprint. The blueprint is design information of a system including resources which satisfy the request. The blueprint itself is well known, and thus, detailed description will be omitted. Further, the design unit 14 can set parameters for generating the blueprint. The parameters include, but not limited to, for example, the number of users who utilize a service, an IP address of physical machine arranged in the physical layer, an IP address of virtual machine arranged in the virtual layer, or the like. The parameter itself is well known, and thus, detailed description will be omitted.

The orchestrator unit 15 executes orchestration for the system designed by the design unit 14 in accordance with the blueprint generated by the design unit 14. The orchestration is automatic control of deployment, setting and management of the service. The service is provided by the orchestration. Further, the orchestrator unit 15 can execute a test of the system.

The catalog database d1 is an aggregate of catalogs. The data model database d2 is an aggregate of data models. The blueprint database d3 is an aggregate of blueprints. The blueprint generated by the design unit 14 is accumulated in the blueprint database d3. The best practice database d4 is an aggregate of best practices.

### <Details of data model>

The data model in the present embodiment clearly specifies relation among resources which exchange predetermined data. The data model is expressed with a set of relation and two resources having the relation. Note that a data model originally determines a structure of data or structured data in an explicit manner. However, in the present invention, the data model is specifically used. In other words, the data model is defined as indicating individual resources provided in a service, or the like, and relation among the resources and can be utilized as a reference for design of a complex system in which a plurality of services are combined. Thus, a group of resources necessary for providing a plurality of services is specified.

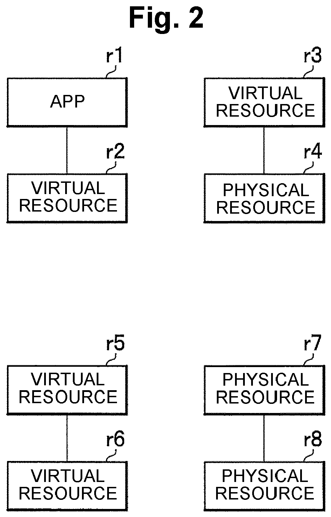

The resources are classified into an app arranged in the app layer, a virtual resource arranged in the virtual layer, and a physical resource arranged in the physical layer. Thus, as illustrated in Fig. 2, the data model includes a data model in which relation is formed between an app r1 and a virtual resource r2, and a data model in which relation is formed between a virtual resource r3 and a physical resource r4. These two data models are examples where relation is formed between resources arranged in adjacent layers. Further, as illustrated in Fig. 2, the data model includes a data model in which relation is formed between virtual resources r5 and r6 and a data model in which relation is formed between physical resources r7 and r8. These two data models are examples where relation is formed between resources arranged in the same layer. Note that the data model may include a data model in which relation is formed between two apps.

The data model enables exchange of predetermined data between specified two resources, that is, defines formation of data flow. Thus, in a case where the app selection unit 12 selects apps, the infrastructure selection unit 13 can select virtual resources having relation with the selected apps in accordance with the data model, so that data is exchanged. Further, the infrastructure selection unit 13 can select physical resources or other virtual resources having relation with the selected virtual resources in accordance with the data model, so that data is exchanged. Still further, the infrastructure selection unit 13 can select other physical resources or virtual resources having relation with the selected physical resources in accordance with the data model, so that data is exchanged.

The apps and the virtual resources are updated or upgraded as appropriate in accordance with, for example, change of types of resources to be utilized for providing a predetermined service, change of a way to use the resources (a usage mode of the user), or the like. Further, the physical resources are provided as, for example, equipment which follows new standards as appropriate. Specifically, reduction in granularity of a management unit such as switch of management from management by a server to management by a processing device or a memory which constitutes the server, replacement of worn out equipment with new equipment having reinforced performance, replacement of equipment with equipment having a changed data structure, or the like, is performed. In this manner, the resources dynamically change. Thus, the data model also dynamically changes (is updated). The data model database d2 is updated as appropriate in accordance with such change.

Note that as illustrated in Fig. 2, while the data model is prepared as a data model having relation between two resources, there may be a plurality of data models which have common one resource out of the two resources having relation and have different resources as the other of the two resources. In this case, there may be a plurality of infrastructures having relation with the apps selected by the app selection unit 12 depending on the data model. The infrastructure selection unit 13 can select one infrastructure using predetermined priority order (for example, service level agreement (SLA), link cost and other policies).

Further, owners who own the resources exist for each of the resources. The resource management device 1 can manage the resources in association with the owners of the resources. Further, users having authority of the resources are determined for each of the resources to be managed by the resource management device 1. The resource management device 1 can manage the resources in association with the users having authority of the resources.

Further, regarding a network on which a service is to be provided, tenants are prepared in unit of a virtual network to be provided to specific users (for example, one customer, one company). One tenant can be prepared for one or a plurality of types of services. Thus, one tenant can be allocated to a plurality of resources which comply with a predetermined rule. As a result, the resource management device 1 can manage the resources in association with tenants to which the resources belong.

Use of the data model enables the infrastructure selection unit 13 to select infrastructures capable of exchanging data (data flow) only with reference to relation between the resources (apps, infrastructures). In other words, infrastructures can be selected for the selected apps regardless of which layers of a multi-layer, resources which handle a data flow belong to. Further, infrastructures can be selected for the selected apps regardless of which services of a multi-service, are to be provided by resources which handle a data flow.

Further, a domain in design of a system which can support triple multi relates to the owner of the resource and the tenant described above. In other words, the owner of the resource within the domain can be specified in accordance with the domain, or a tenant which can be equated with the domain can be prepared. However, as described above, the infrastructures for the specific apps are selected by using the data model, so that the infrastructures can be selected for the selected apps regardless of which domains of a multi-domain the resources which handle the data flow belong to.

In this manner, the data model, which can take a versatile data structure by abstracting a difference between respective domains, a difference between respective layers and a difference between respective services, is useful means for optimizing the resources selected for the request.

### <Details of best practice>

As described above, the best practice is a group of resources which have been confirmed to be optimized so as to exert performance of a level equal to or greater than a predetermined level in provision of a predetermined service. The performance of the level equal to or greater than the predetermined level can include, but not limited to, for example, a level in which throughput of exchange of data between resources which constitute the best practice is equal to or greater than a predetermined value.

A group of resources which constitute the best practice includes a group of resources including resources arranged in different layers. In other words, a group of resources which constitute the best practice includes a group of resources including an app and a virtual resource, a group of resources including a virtual resource and a physical resource, and a group of resources including an app, a virtual resource and a physical resource. Further, a group of resources which constitute the best practice includes a group of resources including resources arranged in the same layer. In other words, a group of resources which constitute the best practices includes a group of resources including two or more apps, a group of resources including two or more virtual resources, and a group of resources including two or more physical resources.

A group of resources which constitute the best practices may be a group of resources having relation in accordance with the data model, a group of resources which do not have relation in accordance with the data model, and a group of resources which is a combination of a partial group of resources having relation in accordance with the data model and a partial group of resources which do not have relation in accordance with the data model. It has been confirmed from knowledge (results) in the past that performance of a level equal to or greater than a predetermined level is exerted in exchange of data between resources which constitute the best practice regardless of whether or not there is relation between the resources which constitute the best practice.

The best practice can be a subset of resources which constitute the entire system for providing a predetermined service. In other words, the best practice can provide a partial (local) optimum solution for the entire system. Thus, by collecting a plurality of best practices so that a data flow becomes continuous, the entire system can be designed so as to be optimized. In other words, the best practice is a set of a plurality of partial best practices which provide a partial optimum solution for the entire system, and the selection unit (12, 13) selects resources of the plurality of partial best practices for the entire system, and the design unit 14 generates a blueprint for designing the entire system using the selected resources of the plurality of partial best practices.

The resources which constitute the best practice have already been operated for providing a service, and thus, there is a case where the parameters to be set by the design unit 14 have been set for the resources. In this case, in a case where the app selection unit 12 or the infrastructure selection unit 13 selects the resources, setting of parameters by the design unit 14 may be omitted. In the present embodiment, description will be continued assuming that the setting of parameters by the design unit 14 is omitted. However, the design unit 14 may reset different parameters. Further, in a case where parameters are not set for the resources which constitute the best practice, the design unit 14 can set parameters for the resources.

### [Processing]

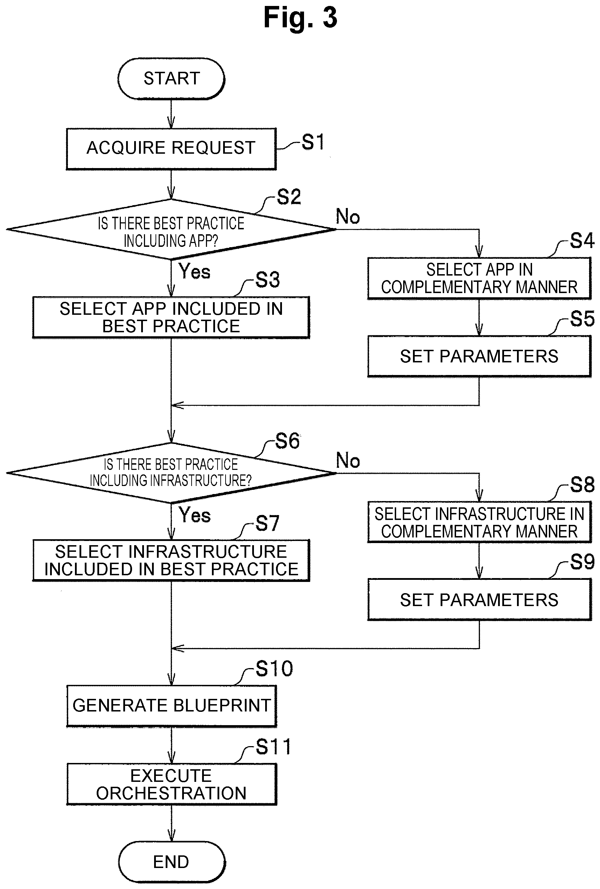

Design processing to be performed by the resource management device 1 to design of a system that provides a plurality of types of services will be described with reference to Fig. 3.

First, the acquisition unit 11 acquires a request from an external device (step S1). Then, the app selection unit 12 analyzes the acquired request and determines whether or not there is a best practice including apps for satisfying the request with reference to the best practice database d4 (step S2). In a case where a best practice exists (step S2: Yes), the app selection unit 12 selects apps included in the best practice (step S3). Note that in a case where there are a plurality of best practices which can be selected, the app selection unit 12 can select one best practice, for example, in accordance with the predetermined priority order described above. Meanwhile, in a case where a best practice does not exist (step S2: No), the app selection unit 12 selects apps for satisfying the request in a complementary manner with reference to the catalog database d1 (step S4). Then, the design unit 14 sets parameters for the selected apps (step S5).

After step S3 or step S5, the infrastructure selection unit 13 determines whether there is a best practice including infrastructures to be chosen as selection targets with reference to the best practice database d4 (step S6). Here, the infrastructures to be chosen as selection targets are infrastructures capable of exchanging data with the apps selected by the app selection unit 12 or infrastructures capable of exchanging data with the infrastructure selected by the infrastructure selection unit 13. Then, in a case where there is a best practice (step S6: Yes), the infrastructure selection unit 13 selects infrastructures included in the best practice (step S7). Note that in a case where there are a plurality of best practices which can be selected, the infrastructure selection unit 13 can select one best practice, for example, in accordance with the predetermined priority order described above. Meanwhile, in a case where a best practice does not exist (step S6: No), the infrastructure selection unit 13 selects infrastructures having relation with the selected apps and infrastructures having relation with the selected infrastructures in a complementary manner in accordance with the data model (step S8). All the infrastructures required for providing a service are selected through step S7 and step S8. Then, the design unit 14 sets parameters for the selected infrastructures (step S9).

Then, the design unit 14 generates a blueprint for designing a system using the apps selected by the app selection unit 12, the infrastructures selected by the infrastructure selection unit 13 and the set parameters (step S10). Finally, the orchestrator unit 15 executes orchestration for the system in accordance with the generated blueprint (step S11).

According to the design processing described in Fig. 3, it is possible to implement provision of service by the designed system. Note that the orchestrator unit 15 may execute a test of the designed system using partial best practices.

Note that there is a case where a blueprint can be generated without parameters being set depending on the selected apps or infrastructures, which means that parameters are not essential. Thus, processing in step S5 and step S9 is arbitrary.

Further, the design unit 14 can accumulate the generated blueprint in the blueprint database d3. Still further, the design unit 14 can form new relation with the apps and the infrastructures used in the designed system and can generate a new data model. The design unit 14 can accumulate the newly generated data model in the data model database d2. Further, the design unit 14 can determine a new best practice using the apps and the infrastructures used in the designed system. The design unit 14 can accumulate the newly determined best practice in the best practice database d4.

### [Specific example]

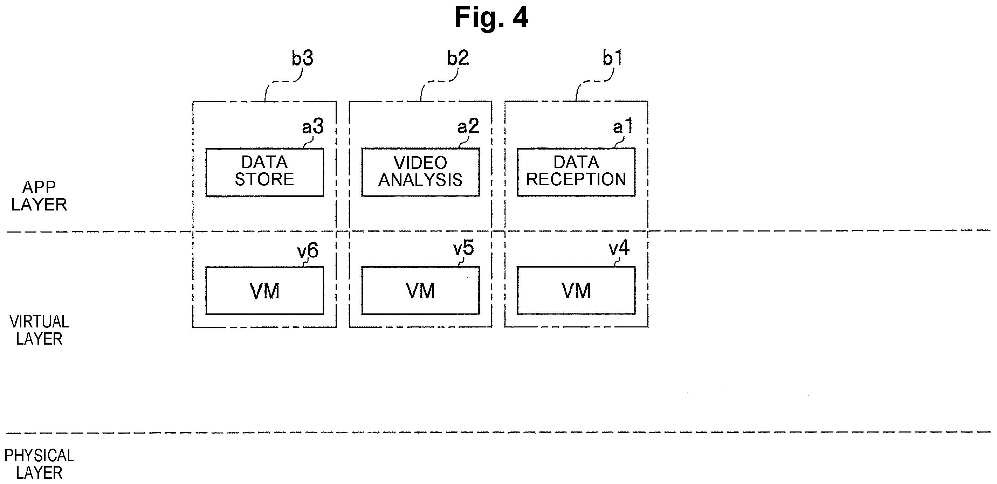

Design of a system in a case where a request for "detecting a suspicious person from a video input via the Internet" is made will be described as a specific example. As illustrated in Fig. 4, after the acquisition unit 11 acquires the request, the app selection unit 12 analyzes the request and can select an app of data reception a1. Here, the app selection unit 12 can select data reception a1 included in a best practice b1 including the app of data reception a1 and an infrastructure of virtual machine (VM) v4 (see step S3 in Fig. 3). Further, the app selection unit 12 analyzes the request and can select an app of video analysis a2. Here, the app selection unit 12 can select video analysis a2 included in a best practice b2 including the app of video analysis a2 and an infrastructure of VM v5 (see step S3 in Fig. 3). Further, the app selection unit 12 analyzes the request and can select an app of data store a3. Here, the app selection unit 12 can select data store a3 included in a best practice b3 including the app of data store a3 and an infrastructure of VM v6 (see step S3 in Fig. 3). Data reception a1, video analysis a2 and data store a3 are arranged in the app layer. The VM v4 to v6 are arranged in the virtual layer.

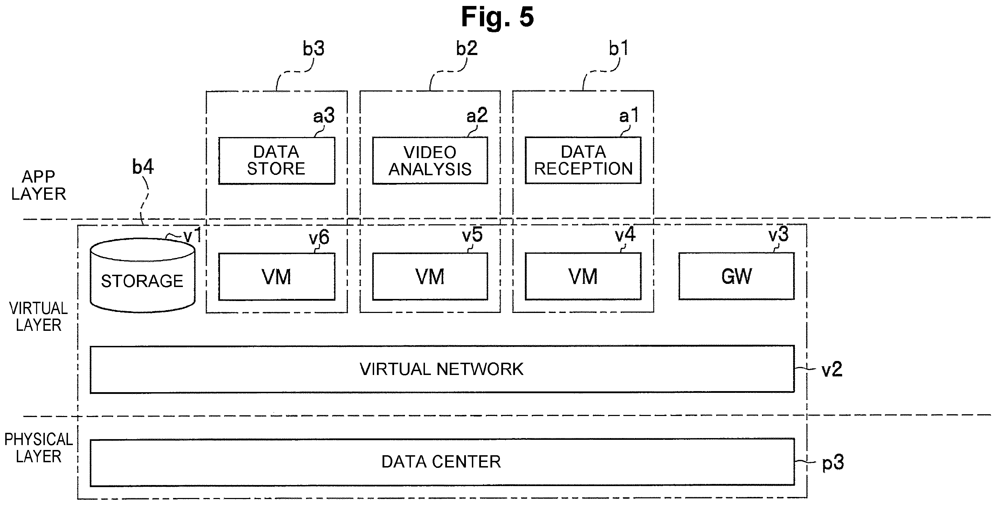

Then, as illustrated in Fig. 5, the infrastructure selection unit 13 selects a best practice b4 capable of exchanging data with best practices b1 to b3 respectively including the selected apps (data reception a1, video analysis a2 and data store a3) (see step S7 in Fig. 3). The best practice b4 includes infrastructures such as a storage v1, a virtual network v2, a gateway (GW) v3, the VM v4 to v6 and a data center p3. The storage v1, the virtual network v2 and the GW v3 are arranged in the virtual layer. The data center p3 is arranged in the physical layer.

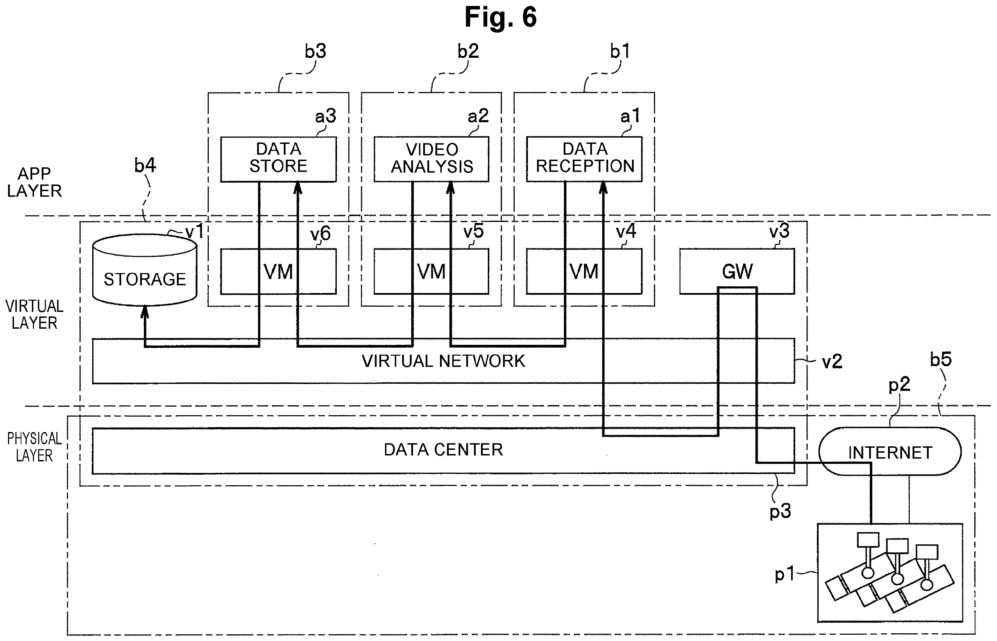

Then, as illustrated in Fig. 6, the infrastructure selection unit 13 selects a best practice b5 capable of exchanging data with the selected best practice b4 (see step S7 in Fig. 3). The best practice b5 includes infrastructures such as a data center p3, a security camera p1 and the Internet p2. The security camera p1 and the Internet p2 are arranged in the physical layer.

All the infrastructures which constitute the system which satisfies the request are selected as described above. The app selection unit 12 can set a data pipeline (solid line with an arrow in Fig. 6) which to be utilized by the selected apps (data reception a1, video analysis a2 and data store a3). In the present specific example, a data transmission source in the data pipeline is the security camera p1, and a data transmission destination is the storage v1. The data pipeline depends on the app selected by the app selection unit 12, and thus, while, for example, the app selection unit 12 can set the data pipeline, a component which sets the data pipeline is not limited to this. For example, the design unit 14 may set the data pipeline. Note that in a case where a plurality of types of data pipelines can be set for the selected apps, one data pipeline can be set in accordance with selection of the infrastructures by the infrastructure selection unit 13.

In a case where the selected apps (data reception a1, video analysis a2 and data store a3) have predetermined operating conditions, the infrastructure selection unit 13 preferably selects infrastructures which can fulfill the operating conditions. The "predetermined operating conditions" can be, for example, a condition that the infrastructure has a sufficient resource amount (resource check), but the predetermined operating conditions are not limited to this. In a case where there is an infrastructure whose resource amount is insufficient, the resource management device 1 can notify an owner of the infrastructure that the resource amount is insufficient. In a case where the infrastructures are selected, the design unit 14 preferably accumulates a best practice of the resources including the infrastructures and the apps in the best practice database d4.

Thereafter, the design unit 14 generates a blueprint (see step S10 in Fig. 3), and the orchestrator unit 15 executes orchestration (see step S11 in Fig. 3). It is therefore possible to design a system in which the security camera p1 can capture an image of a suspicious person, with the best practices b1 to b5 as a system including the selected resources and implement a service which satisfies the request.

### (Program)

Further, it is possible to cause a computer to execute functions of the resource management device 1 according to the above-described embodiment by a program. In this case, effects similar to the effects of the above-described embodiment can be obtained by the computer executing the program. Further, it is also possible to implement processing similar to the processing in the above-described embodiment by recording the program in a computer readable recording medium and causing the computer to read and execute the program recorded in this recording medium. An example of the computer which executes a resource management program which implements functions similar to the functions of the resource management device 1 will be described below.

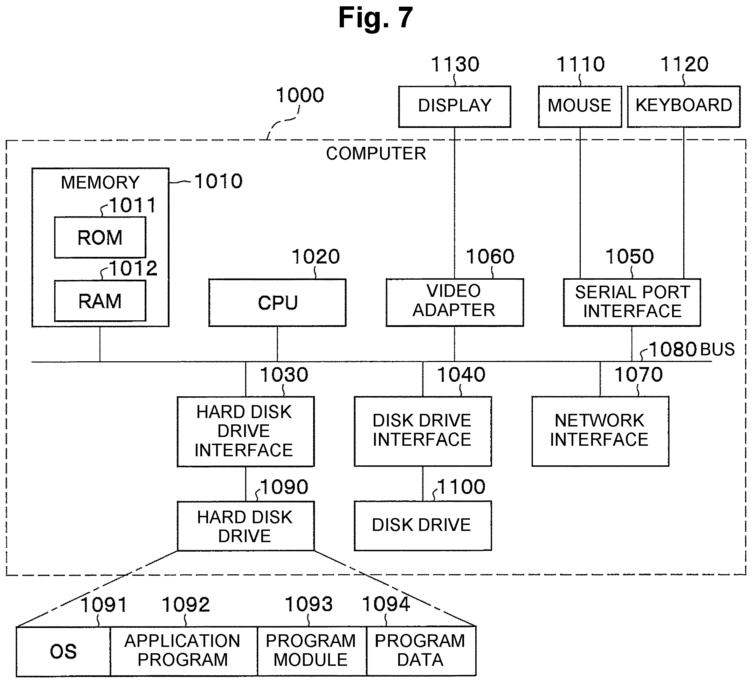

Fig. 7 is a view illustrating a computer which executes the resource management program. As illustrated in Fig. 7, a computer 1000 includes, for example, a memory 1010, a CPU 1020, a hard disk drive interface 1030, a disk drive interface 1040, a serial port interface 1050, a video adapter 1060 and a network interface 1070. These components are connected with a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a detachable storage medium such as a magnetic disk and an optical disk is inserted into the disk drive 1100. For example, a mouse 1110 and a keyboard 1120 are connected to the serial port interface 1050. For example, a display 1130 is connected to the video adapter 1060. The memory 1010, the hard disk drive 1090, the disk drive 1100, and the storage medium to be inserted into the disk drive 1100 become specific hardware resources of the storage unit provided at the resource management device 1.

Here, as illustrated in Fig. 7, the hard disk drive 1090, for example, stores an OS 1091, an application program 1092, a program module 1093 and program data 1094. The respective tables described in the above-described embodiment are stored in, for example, the hard disk drive 1090 and the memory 1010.

Further, the resource management program is stored in the hard disk drive 1090 as, for example, a program module which describes a command to be executed by the computer 1000. Specifically, a program module which describes respective kinds of processing to be executed by the resource management device 1 described in the above-described embodiment is stored in the hard disk drive 1090.

Further, data to be used in information processing by the resource management program is stored in, for example, the hard disk drive 1090 as the program data. Then, the CPU 1020 reads out the program module 1093 and the program data 1094 stored in the hard disk drive 1090 to the RAM 1012 as necessary and executes the above-described procedure.

Note that the program module 1093 and the program data 1094 relating to the resource management program may be stored in, for example, a detachable storage medium and may be read out by the CPU 1020 via the disk drive 1100, or the like, as well as being stored in the hard disk drive 1090. Alternatively, the program module 1093 and the program data 1094 according to the resource management program may be stored in other computers connected via a network such as a local area network (LAN) and a wide area network (WAN) and may be read out by the CPU 1020 via the network interface 1070.

### [Effects]

As described above, the present embodiment is the resource management device 1 including the selection unit (the app selection unit 12, the infrastructure selection unit 13) configured to select a plurality of resources included in a best practice, the design unit 14 configured to generate a blueprint for designing a system using the selected resources, and the orchestrator unit 15 configured to execute orchestration for the designed system in accordance with the generated blueprint.

Further, the present embodiment is a resource management method to be executed by the resource management device 1, the resource management method including a step of selecting a plurality of resources included in a best practice, a step of generating a blueprint for designing a system using the selected resources, and a step of executing orchestration for the designed system in accordance with the generated blueprint.

According to these, the present embodiment can set a data pipeline for providing a plurality of types of services from a best practice for which performance has been confirmed. Thus, the present embodiment can facilitate design of a system that provides a plurality of types of services.

Further, the plurality of resources include an app included in a best practice for satisfying a request and an infrastructure included in a best practice capable of exchanging data with the app.

These enable the present embodiment to set a data pipeline in accordance with the apps selected in accordance with the request.

Further, in a case where a best practice including a specific infrastructure does not exist, the selection unit selects the specific infrastructure having relation with the selected apps or the selected infrastructures in accordance with a data model which clearly specifies relation among resources arranged in respective layers of a multi-layer.

This enables the present embodiment to reliably set a data pipeline even in a case where a best practice does not exist.

Further, the best practice is a set of a plurality of partial best practices which provide a partial optimum solution for the entire system, the selection unit selects resources of the plurality of partial best practices for the entire system, and the design unit generates a blueprint for designing the entire system using the selected resources of the plurality of partial best practices.

This enables the present embodiment to design the entire system so as to optimize the entire system using partial best practices.

### [Modified examples]

(a): It is possible to construct an AI model which has learned a combination of a request, a best practice selected for satisfying the request, and a performance value (for example, throughput) of a system including the best practice, through machine learning. It is possible to obtain as output, a best practice which achieves a desired performance value of the system by inputting an unknown request to the AI model.
(b): Various kinds of techniques described in the present embodiment can be combined as appropriate.

### Reference Signs List

- 1: Resource management device
- 11: Acquisition unit
- 12: App selection unit (selection unit)
- 13: Infrastructure selection unit (selection unit)
- 14: Design unit
- 15: Orchestrator unit
- d1: Catalog database
- d2: Data model database
- d3: Blueprint database
- d4: Best practice database

## Claims

1. A resource management device (1) that manages resources for providing a plurality of types of services, the resource management device (1) storing therein a best practice resource group which is a group of best practice resources which have been optimized so as to exert performance of a level equal to or greater than a predetermined level in provision of a predetermined service between two or more resources, each of the two or more resources being selected from one or more of: a plurality of applications (r1) each as a resource arranged in an application layer; a plurality of virtual resources (r2, r3, r5, r6) each as a resource arranged in a virtual layer; and a plurality of physical resources (r4, r7, r8) each as a resource arranged in a physical layer, the resource management device (1) comprising:
a selection unit (12) configured to select an application (r1) required for providing the predetermined service and then select a group of resources each of which is in the group of best practice resources, and wherein each resource of the selected group of resources is either a resource capable of exchanging data with the selected application (r1) or a resource capable of exchanging data with another resource of the selected group of resources, with reference to the best practice resource group, wherein the selection unit is configured to, when there are a plurality of virtual resources or physical resources each of which can be selected as a resource of the selected group of resources, make a selection from the plurality of the virtual resources or physical resources using a predetermined priority order, wherein the predetermined priority order includes at least a service level agreement and a link cost;
a design unit (14) configured to generate a blueprint for designing a system using the selected resources; and
an orchestrator unit (15) configured to execute orchestration for the designed system in accordance with the generated blueprint.

2. The resource management device (1) according to claim 1,
wherein the resource management device (1) further stores therein a group of data models, the data model representing a set of two resources having a relation therebetween, the two resources being selected from: a plurality of the applications (r1) each arranged in the application layer; a plurality of the virtual resources (r2, r3, r5, r6) each arranged in the virtual layer; and a plurality of the physical resources (r4, r7, r8) each arranged in the physical layer, and
wherein, when no group of resources is present which is best practice between the selected application (r1) and the first resource capable of exchanging data with the selected application or between the first resource and the second resource capable of exchanging data with the first resource, the selection unit (12) is configured to: set a data pipeline to be utilized by the selected application, the data pipeline being a path of data from a data transmission source to a data transmission destination; and select a plurality of appropriate resources such that data can be exchanged via the data pipeline, with reference to the group of data models.

3. The resource management device according to any one of claims 1 to 2,
wherein, when the group of best practice resources comprises a plurality of resource sub-groups, each resource sub-group being a set of resources constituting part of the entire system for providing the predetermined service:
the selection unit selects the resource sub-groups from the plurality of resource sub-groups for the entire system; and
the design unit (14) generates a blueprint for designing the entire system using the resources of the selected resource sub-groups.

4. A resource management method to be executed by a resource management device (1), the resource management device (1) managing resources for providing a plurality of types of services and storing therein a best practice resource group which is a group of best practice resources which have been optimized so as to exert performance of a level equal to or greater than a predetermined level in provision of a predetermined service between two or more resources, each of the two or more resources being selected from one or more of: a plurality of applications (r1) each as a resource arranged in an application layer, a plurality of virtual resources (r2, r3, r5, r6) each as a resource arranged in a virtual layer, and a plurality of physical resources (r4, r7, r8) each as a resource arranged in a physical layer, the resource management method comprising:
a step of selecting an application (r1) required for providing the predetermined service;
after the step of selecting the application, a step of selecting a group of resources each of which is in the group of best practice resources, and wherein each resource of the selected group of resources is either a resource capable of exchanging data with the selected application (r1) or a resource capable of exchanging data with another resource of the selected group of resources, with reference to the best practice resource group, the step of selecting the group of resources including, when there are a plurality of virtual resources or physical resources each of which can be selected as a resource of the selected group of resources, making a selection from the plurality of the virtual resources or physical resources using a predetermined priority order, wherein the predetermined priority order includes at least a service level agreement and a link cost;
a step of generating a blueprint for designing a system using the selected resources; and
a step of executing orchestration for the designed system in accordance with the generated blueprint.

5. The resource management method according to claim 4,
wherein the resource management device further stores therein a group of data models, the data model representing a set of two resources having a relation therebetween, the two resources being selected from: a plurality of the applications (r1) each arranged in the application layer; a plurality of the virtual resources (r2, r3, r5, r6) each arranged in the virtual layer; and a plurality of the physical resources (r4, r7, r8) each arranged in the physical layer, and
wherein, when no group of resources is present which is best practice between the selected application and the first resource capable of exchanging data with the selected application or between the first resource and the second resource capable of exchanging data with the first resource, the resource management method further comprises a step of setting a data pipeline to be utilized by the selected application, the data pipeline being a path of data from a data transmission source to a data transmission destination; and a step of selecting a plurality of appropriate resources such that data can be exchanged via the data pipeline, with reference to the group of data models.

6. The resource management method according to claim 4 or 5,
wherein, when the group of best practice resources comprises a plurality of resource sub-groups, each resource sub-group constituting part of the entire system for providing the predetermined service:
the step of selecting the group of resources selects the resource sub-groups from the plurality of resource sub-groups for the entire system; and
the step of generating the blueprint generates a blueprint for designing the entire system using the resources of the selected resource sub-groups .

7. A resource management program for causing a computer to execute the resource management method according to any one of claims 4 to 6.

## Patentansprüche

1. Ressourcenverwaltungsvorrichtung (1), die Ressourcen zum Bereitstellen einer Vielzahl von Diensttypen verwaltet, wobei die Ressourcenverwaltungsvorrichtung (1) eine Best-Practice-Ressourcengruppe speichert, die eine Gruppe von Best-Practice-Ressourcen ist, die optimiert wurden, um bei Bereitstellung eines vorbestimmten Dienstes zwischen zwei oder mehr Ressourcen eine Leistung mit einem gleichen oder größeren Niveau als ein vorbestimmtes Niveau zu erbringen, wobei jede der zwei oder mehr Ressourcen aus einem oder mehreren ausgewählt ist von: einer Vielzahl von Anwendungen (r1), jeweils als eine in einer Anwendungsschicht eingerichtete Ressource; einer Vielzahl virtueller Ressourcen (r2, r3, r5, r6), jeweils als eine in einer virtuellen Schicht eingerichtete Ressource; und einer Vielzahl physischer Ressourcen (r4, r7, r8), jeweils als eine in einer physischen Schicht eingerichtete Ressource, wobei die Ressourcenverwaltungsvorrichtung (1) umfasst:
eine Auswahleinheit (12), die dazu konfiguriert ist, eine zum Bereitstellen des vorbestimmten Dienstes erforderliche Anwendung (r1) auszuwählen und danach eine Gruppe von Ressourcen auszuwählen, von denen jede zu der Gruppe der Best-Practice-Ressourcen gehört, und wobei jede Ressource der ausgewählten Gruppe von Ressourcen entweder eine Ressource ist, die zum Austauschen von Daten mit der ausgewählten Anwendung (r1) imstande ist, oder eine Ressource, die zum Austauschen von Daten mit einer anderen Ressource der ausgewählten Gruppe von Ressourcen imstande ist, unter Bezugnahme auf die Best-Practice-Ressourcengruppe, wobei die Auswahleinheit dazu konfiguriert ist, wenn eine Vielzahl virtueller oder physischer Ressourcen vorhanden ist, von denen jede als Ressource der ausgewählten Gruppe von Ressourcen ausgewählt werden kann, eine Auswahl aus der Vielzahl der virtuellen oder physischen Ressourcen unter Verwendung einer vorbestimmten Prioritätsreihenfolge zu treffen, wobei die vorbestimmte Prioritätsreihenfolge mindestens eine Dienstgütevereinbarung und Verbindungskosten beinhaltet;
eine Entwurfseinheit (14), die dazu konfiguriert ist, eine Blaupause zum Entwerfen eines Systems unter Verwendung der ausgewählten Ressourcen zu erzeugen; und
eine Orchestratoreinheit (15), die dazu konfiguriert ist, die Orchestrierung für das entworfene System gemäß der erzeugten Blaupause auszuführen.

2. Ressourcenverwaltungsvorrichtung (1) nach Anspruch 1,
wobei die Ressourcenverwaltungsvorrichtung (1) weiter eine Gruppe von Datenmodellen darin speichert, wobei das Datenmodell einen Satz aus zwei Ressourcen darstellt, die eine Beziehung zueinander aufweisen, wobei die beiden Ressourcen ausgewählt sind aus: einer Vielzahl von Anwendungen (r1), die jeweils in der Anwendungsschicht eingerichtet sind; einer Vielzahl virtueller Ressourcen (r2, r3, r5, r6), die jeweils in der virtuellen Schicht eingerichtet sind; und einer Vielzahl physischer Ressourcen (r4, r7, r8), die jeweils in der physischen Schicht eingerichtet sind, und
wobei, wenn keine Gruppe von Ressourcen vorhanden ist, welche die Best-Practice zwischen der ausgewählten Anwendung (r1) und der ersten Ressource ist, die zum Austauschen von Daten mit der ausgewählten Anwendung imstande ist, oder zwischen der ersten Ressource und der zweiten Ressource, die zum Austauschen von Daten mit der ersten Ressource imstande ist, die Auswahleinheit (12) dazu konfiguriert ist: eine von der ausgewählten Anwendung zu nutzende Datenpipeline festzulegen, wobei die Datenpipeline ein Pfad von Daten von einer Datenübertragungsquelle zu einem Datenübertragungsziel ist; und eine Vielzahl geeigneter Ressourcen derart auszuwählen, dass Daten über die Datenpipeline unter Bezugnahme auf die Gruppe von Datenmodellen ausgetauscht werden können.

3. Ressourcenverwaltungsvorrichtung nach einem der Ansprüche 1 bis 2,
wobei, wenn die Gruppe der Best-Practice-Ressourcen eine Vielzahl von Ressourcenuntergruppen umfasst, jede Ressourcenuntergruppe ein Satz von Ressourcen ist, die einen Teil des gesamten Systems zum Bereitstellen des vorbestimmten Dienstes bilden:
die Auswahleinheit die Ressourcenuntergruppen aus der Vielzahl von Ressourcenuntergruppen für das gesamte System auswählt; und
die Entwurfseinheit (14) eine Blaupause zum Entwerfen des Gesamtsystems unter Verwendung der Ressourcen der ausgewählten Ressourcenuntergruppen erzeugt.

4. Ressourcenverwaltungsverfahren, das von einer Ressourcenverwaltungsvorrichtung (1) auszuführen ist, wobei die Ressourcenverwaltungsvorrichtung (1) Ressourcen zum Bereitstellen einer Vielzahl von Diensttypen verwaltet, und darin eine Best-Practice-Ressourcengruppe speichert, die eine Gruppe von Best-Practice-Ressourcen ist, die optimiert wurden, um bei Bereitstellung eines vorbestimmten Dienstes zwischen zwei oder mehr Ressourcen eine Leistung mit einem gleichen oder größeren Niveau als ein vorbestimmtes Niveau zu erbringen, wobei jede der zwei oder mehr Ressourcen aus einem oder mehreren ausgewählt wird aus einer Vielzahl von Anwendungen (r1), jeweils als eine in einer Anwendungsschicht angeordnete Ressource, einer Vielzahl virtueller Ressourcen (r2, r3, r5, r6), jeweils als eine in einer virtuellen Schicht angeordnete Ressource, und einer Vielzahl physischer Ressourcen (r4, r7, r8), jeweils als eine in einer physischen Schicht angeordnete Ressource, wobei das Ressourcenverwaltungsverfahren umfasst:
einen Schritt zum Auswählen einer Anwendung (r1), die zum Bereitstellen des vorbestimmten Dienstes erforderlich ist;
nach dem Schritt des Auswählens der Anwendung, einen Schritt zum Auswählen einer Gruppe von Ressourcen, von denen jede zu der Gruppe der Best-Practice-Ressourcen gehört, und wobei jede Ressource der ausgewählten Gruppe von Ressourcen entweder eine Ressource ist, die zum Austauschen von Daten mit der ausgewählten Anwendung (r1) imstande ist, oder eine Ressource, die zum Austauschen von Daten mit einer anderen Ressource der ausgewählten Gruppe von Ressourcen imstande ist, unter Bezugnahme auf die Best-Practice-Ressourcengruppe, der Schritt zum Auswählen der Gruppe von Ressourcen, wenn eine Vielzahl virtueller oder physischer Ressourcen vorhanden ist, von denen jede als Ressource der ausgewählten Gruppe von Ressourcen ausgewählt werden kann, das Treffen einer Auswahl aus der Vielzahl der virtuellen oder physischen Ressourcen unter Verwendung einer vorbestimmten Prioritätsreihenfolge beinhaltet, wobei die vorbestimmte Prioritätsreihenfolge mindestens eine Dienstgütevereinbarung und Verbindungskosten beinhaltet;
einen Schritt zum Erzeugen einer Blaupause zum Entwerfen eines Systems unter Verwendung der ausgewählten Ressourcen; und
einen Schritt zum Ausführen einer Orchestrierung für das entworfene System gemäß der erzeugten Blaupause.

5. Ressourcenverwaltungsverfahren nach Anspruch 4,
wobei die Ressourcenverwaltungsvorrichtung weiter eine Gruppe von Datenmodellen darin speichert, wobei das Datenmodell einen Satz aus zwei Ressourcen darstellt, die eine Beziehung zueinander aufweisen, wobei die beiden Ressourcen ausgewählt sind aus: einer Vielzahl von Anwendungen (r1), die jeweils in der Anwendungsschicht eingerichtet sind; einer Vielzahl virtueller Ressourcen (r2, r3, r5, r6), die jeweils in der virtuellen Schicht eingerichtet sind; und einer Vielzahl physischer Ressourcen (r4, r7, r8), die jeweils in der physischen Schicht eingerichtet sind, und
wobei, wenn keine Gruppe von Ressourcen vorhanden ist, die die Best-Practice zwischen der ausgewählten Anwendung und der ersten Ressource ist, die zum Austauschen von Daten mit der ausgewählten Anwendung imstande ist, oder zwischen der ersten Ressource und der zweiten Ressource, die zum Austauschen von Daten mit der ersten Ressource imstande ist, das Ressourcenverwaltungsverfahren weiter einen Schritt zum Festlegen einer von der ausgewählten Anwendung zu nutzenden Datenpipeline umfasst, wobei die Datenpipeline ein Pfad von Daten von einer Datenübertragungsquelle zu einem Datenübertragungsziel ist; und einen Schritt zum Auswählen einer Vielzahl geeigneter Ressourcen derart, dass Daten über die Datenpipeline unter Bezugnahme auf die Gruppe von Datenmodellen ausgetauscht werden können.

6. Ressourcenverwaltungsverfahren nach Anspruch 4 oder 5,
wobei, wenn die Gruppe der Best-Practice-Ressourcen eine Vielzahl von Ressourcenuntergruppen umfasst, jede Ressourcenuntergruppe einen Teil des gesamten Systems zum Bereitstellen des vorbestimmten Dienstes bildet:
der Schritt zum Auswählen der Gruppe von Ressourcen die Ressourcenuntergruppen aus der Vielzahl von Ressourcenuntergruppen für das gesamte System auswählt; und
der Schritt zum Erzeugen der Blaupause eine Blaupause zum Entwerfen des gesamten Systems unter Verwendung der Ressourcen der ausgewählten Ressourcenuntergruppen erzeugt.

7. Ressourcenverwaltungsprogramm zum Veranlassen eines Computers, das Ressourcenverwaltungsverfahren nach einem der Ansprüche 4 bis 6 auszuführen.

## Revendications

1. Dispositif de gestion de ressources (1) qui gère des ressources pour fournir une pluralité de types de services, le dispositif de gestion de ressources (1) stockant dans celui-ci un groupe de ressources de bonnes pratiques qui est un groupe de ressources de bonnes pratiques qui ont été optimisées de manière à disposer de performances d'un niveau égal ou supérieur à un niveau prédéterminé dans la fourniture d'un service prédéterminé entre deux ressources ou plus, chacune des deux ressources ou plus étant sélectionnée parmi un ou plusieurs éléments suivants : une pluralité d'applications (r1) chacune en tant que ressource agencée dans une couche d'application ; une pluralité de ressources virtuelles (r2, r3, r5, r6) chacune en tant que ressource agencée dans une couche virtuelle ; et une pluralité de ressources physiques (r4, r7, r8) chacune en tant que ressource agencée dans une couche physique, le dispositif de gestion de ressources (1) comprenant :
une unité de sélection (12) configurée pour sélectionner une application (r1) requise pour fournir le service prédéterminé, puis sélectionner un groupe de ressources, chacune étant dans le groupe de ressources de bonnes pratiques, et dans lequel chaque ressource du groupe de ressources sélectionné est soit une ressource capable d'échanger des données avec l'application sélectionnée (r1), soit une ressource capable d'échanger des données avec une autre ressource du groupe de ressources sélectionné, en référence au groupe de ressources de bonnes pratiques, dans lequel l'unité de sélection est configurée pour, lorsqu'il y a une pluralité de ressources virtuelles ou de ressources physiques, chacune pouvant être sélectionnée comme ressource du groupe de ressources sélectionné, faire une sélection parmi la pluralité des ressources virtuelles ou ressources physiques en utilisant un ordre de priorité prédéterminé, dans lequel l'ordre de priorité prédéterminé inclut au moins un accord de niveau de service et un coût de liaison ;
une unité de conception (14) configurée pour générer un plan pour la conception d'un système utilisant les ressources sélectionnées ; et
une unité d'orchestration (15) configurée pour exécuter l'orchestration du système conçu conformément au plan généré.

2. Dispositif de gestion de ressources (1) selon la revendication 1,
dans lequel le dispositif de gestion de ressources (1) stocke en outre dans celui-ci un groupe de modèles de données, le modèle de données représentant un ensemble de deux ressources présentant une relation entre elles, les deux ressources étant sélectionnées parmi : une pluralité d'applications (r1) chacune agencée dans la couche d'application ; une pluralité de ressources virtuelles (r2, r3, r5, r6) chacune agencée dans la couche virtuelle ; et une pluralité des ressources physiques (r4, r7, r8) chacune agencée dans la couche physique, et
dans lequel, lorsqu'aucun groupe de ressources n'est présent, ce qui est la bonne pratique entre l'application sélectionnée (r1) et la première ressource capable d'échanger des données avec l'application sélectionnée ou entre la première ressource et la seconde ressource capable d'échanger des données avec la première ressource, l'unité de sélection (12) est configurée pour : définir un pipeline de données à utiliser par l'application sélectionnée, le pipeline de données étant un chemin de données depuis une source de transmission de données à une destination de transmission de données ; et sélectionner une pluralité de ressources appropriées de sorte que des données puissent être échangées via le pipeline de données, en référence au groupe de modèles de données.

3. Dispositif de gestion de ressources selon l'une quelconque des revendications 1 à 2,
dans lequel, lorsque le groupe de ressources de bonnes pratiques comprend une pluralité de sous-groupes de ressources, chaque sous-groupe de ressources étant un ensemble de ressources constituant une partie du système entier pour fournir le service prédéterminé :
l'unité de sélection sélectionne les sous-groupes de ressources parmi la pluralité de sous-groupes de ressources pour le système entier ; et
l'unité de conception (14) génère un plan pour la conception du système entier en utilisant les ressources des sous-groupes de ressources sélectionnés.

4. Procédé de gestion de ressources à exécuter par un dispositif de gestion de ressources (1), le dispositif de gestion de ressources (1) gérant des ressources pour fournir une pluralité de types de services et stockant dans celui-ci un groupe de ressources de bonnes pratiques qui est un groupe de ressources de bonnes pratiques qui ont été optimisées de manière à disposer de performances d'un niveau égal ou supérieur à un niveau prédéterminé dans la fourniture d'un service prédéterminé entre deux ressources ou plus, chacune des deux ressources ou plus étant sélectionnée parmi un ou plusieurs éléments suivants : une pluralité d'applications (r1) chacune en tant que ressource agencée dans une couche d'application ; une pluralité de ressources virtuelles (r2, r3, r5, r6) chacune en tant que ressource agencée dans une couche virtuelle ; et une pluralité de ressources physiques (r4, r7, r8) chacune en tant que ressource agencée dans une couche physique, le procédé de gestion de ressources comprenant :
une étape de sélection d'une application (r1) requise pour fournir le service prédéterminé ;
après l'étape de sélection de l'application, une étape de sélection d'un groupe de ressources, chacune étant dans le groupe de ressources de bonnes pratiques, et dans lequel chaque ressource du groupe de ressources sélectionné est soit une ressource capable d'échanger des données avec l'application sélectionnée (r1), soit une ressource capable d'échanger des données avec une autre ressource du groupe de ressources sélectionné, en référence au groupe de ressources de bonnes pratiques, l'étape de sélection du groupe de ressources incluant, lorsqu'il y a une pluralité de ressources virtuelles ou ressources physiques, chacune pouvant être sélectionnée comme ressource du groupe de ressources sélectionné, faire une sélection parmi la pluralité des ressources virtuelles ou ressources physiques en utilisant un ordre de priorité prédéterminé, dans lequel l'ordre de priorité prédéterminé inclut au moins un accord de niveau de service et un coût de liaison ;
une étape de génération d'un plan pour la conception d'un système utilisant les ressources sélectionnées ; et
une étape d'exécution d'orchestration du système conçu conformément au plan généré.

5. Procédé de gestion de ressources selon la revendication 4,
dans lequel le dispositif de gestion de ressources stocke en outre dans celui-ci un groupe de modèles de données, le modèle de données représentant un ensemble de deux ressources présentant une relation entre elles, les deux ressources étant sélectionnées parmi : une pluralité d'applications (r1) chacune agencée dans la couche d'application ; une pluralité de ressources virtuelles (r2, r3, r5, r6) chacune agencée dans la couche virtuelle ; et une pluralité des ressources physiques (r4, r7, r8) chacune agencée dans la couche physique, et
dans lequel, lorsqu'aucun groupe de ressources n'est présent, ce qui est la bonne pratique entre l'application sélectionnée et la première ressource capable d'échanger des données avec l'application sélectionnée ou entre la première ressource et la seconde ressource capable d'échanger des données avec la première ressource, le procédé de gestion de ressources comprend en outre une étape de définition d'un pipeline de données à utiliser par l'application sélectionnée, le pipeline de données étant un chemin de données depuis une source de transmission de données à une destination de transmission de données ; et une étape de sélection d'une pluralité de ressources appropriées de sorte que des données puissent être échangées via le pipeline de données, en référence au groupe de modèles de données.

6. Procédé de gestion de ressources selon la revendication 4 ou 5,
dans lequel, lorsque le groupe de ressources de bonnes pratiques comprend une pluralité de sous-groupes de ressources, chaque sous-groupe de ressources constituant une partie du système entier pour fournir le service prédéterminé :
l'étape de sélection du groupe de ressources sélectionne les sous-groupes de ressources parmi la pluralité de sous-groupes de ressources pour le système entier ; et
l'étape de génération du plan génère un plan pour la conception du système entier en utilisant les ressources des sous-groupes de ressources sélectionnés.

7. Programme de gestion de ressources pour amener un ordinateur à exécuter le procédé de gestion de ressources selon l'une quelconque des revendications 4 à 6.
